# EUROPÄISCHE PATENTSCHRIFT

(11) **EP 3 027 538 B1**
(45) Veröffentlichungstag und Bekanntmachung des Hinweises auf die Patenterteilung: **04.01.2017**
(21) Anmeldenummer: 14742504.5
(22) Anmeldetag: 23.07.2014
(51) Int. Cl.: B65G 11/16, B65G 27/04

(54) **SCHWINGFÖRDERER UND VERFAHREN ZUR FÖRDERUNG VON SILICIUMBRUCHSTÜCKEN**
VIBRATORY CONVEYOR AND METHOD FOR CONVEYING SILICON FRAGMENTS
CONVOYEUR OSCILLANT ET PROCÉDÉ DE TRANSPORT DE MORCEAUX DE SILICIUM

(30) Priorität: 01.08.2013 DE 102013215096
(43) Veröffentlichungstag der Anmeldung: 08.06.2016
(73) Patentinhaber: Wacker Chemie AG, 81737 München (DE)
(72) Erfinder: LAZARUS, Werner, 84335 Mitterskirchen (DE); ROSUMEK, Marius, 84489 Burghausen (DE)
(74) Vertreter: Potten, Holger
(86) Internationale Anmeldenummer: PCT/EP2014/065818
(87) Internationale Veröffentlichungsnummer: WO 2015/014688

(56) Entgegenhaltungen:
- US-A- 5 705 250
- US-A1- 2013 189 176
- US-B1- 6 375 011

## Beschreibung

Die Erfindung betrifft ein Verfahren zur Förderung von Siliciumbruchstücken. Die Erfindung betrifft auch Schwingförderer.

Silicium hoher Reinheit wird beispielsweise durch chemische Gasphasenabscheidung eines hochreinen Chlorsilangases auf einem aufgeheizten Substrat erzeugt. Das Silicium fällt dabei polykristallin in Form von Stäben an. Ein Großteil des für die Halbleiterindustrie erforderlichen monokristallinen Siliciums wird aus diesen Siliciumstäben mittels des Czochralski-Verfahrens erzeugt.

Bei diesem Verfahren wird ein Schmelztiegel mit Siliciumbruchstücken befüllt. Der Siliciumbruch wird aufgeschmolzen, und aus der Schmelze mittels eines Impfkristalls eine monokristalline Siliciumstange gezogen.

Die für die Befüllung der Schmelztiegel benötigten Siliciumbruchstücke erhält man durch Brechen der während der Gasphasenabscheidung erzeugten polykristallinen Stäbe. Als Brechwerkzeuge werden beispielsweise aus Metall gefertigte Backen- oder Walzenbrecher, Hämmer oder Meissel verwendet.

Nach dem Brechen der sprödharten Siliciumstäbe lassen sich störende Partikel und Fremdatome auf den scharfkantigen Oberflächen der Bruchstücke nachweisen. Bei den Partikeln handelt es sich in der Regel um Staub, der beim Brechen des Siliciums und beim Transport der Bruchstücke erzeugt wird; die Fremdatome stammen insbesondere von den Brechwerkzeugen.

Diese Kontaminationen müssen vor dem Aufschmelzen des Siliciumbruchs im Schmelztiegel entfernt werden. Üblicherweise erfolgt dies durch eine materialabtragende Ätzbehandlung mit Säuren oder Säuregemischen und anschließendem Spülen mit Wasser.

Die großen spezifischen Oberflächen der scharfkantigen Bruchstücke haben schwerwiegende Nachteile, insbesondere resultiert daraus
- ein hoher Säureverbrauch für materialabtragende Behandlungen,
- eine hohe Säureverschleppung durch den oberflächlich anhaftenden Säurefilm beim Umsetzen des Siliciumbruchs in ein Spülbad mit einer einhergehenden Kontamination des Spülwassers, und
- ein Hinterätzen der Bruchkanten.

In US 6375011 B1 wurde daher ein Verfahren zur Förderung von Siliciumbruch vorgeschlagen, bei dem die Siliciumbruchstücke über eine aus Reinstsilicium gefertigte Förderfläche eines Schwingförderers geführt wird.

Dabei werden scharfkantige Siliciumbruchstücke verrundet, wenn sie auf der schwingenden Förderfläche eines Schwingförderers gefördert werden. Die spezifischen Oberflächen der Siliciumbruchstücke werden reduziert, oberflächlich anhaftende Kontaminationen werden abgeschliffen.

Das vorgenannte Dokument offenbart auch einen Schwingförderer mit einer Förderrinne nach dem Oberbegriff der Ansprüche 1 und 6.

Der durch eine erste Schwingfördereinheit verrundete Siliciumbruch kann über eine zweite Schwingfördereinheit geführt werden. Deren Förderfläche besteht aus parallel angeordneten Reinstsiliciumplatten, die über seitliche Befestigungsvorrichtungen fixiert sind. Die Reinstsiliciumplatten weisen Durchtrittsöffnungen, beispielsweise in Form von Durchbrüchen auf. Die Förderränder, die als seitliche Begrenzung der Förderflächen dienen, sind ebenfalls aus Reinstsiliciumplatten gefertigt und werden beispielsweise durch Niederhalter fixiert.

Die aus Reinstsiliciumplatten gefertigten Förderflächen werden durch Stahlplatten und gegebenenfalls Dämpfungsmatten gestützt.

Es hat sich jedoch gezeigt, dass es während des Betriebs von derartigen Schwingfördereinheiten zur Lockerung und sogar zum Bruch der Silicium-Auskleidung der Förderfläche kommen kann. Weiterhin besteht dadurch auch die Gefahr der Produktkontamination während der Förderung.

Daraus ergab sich die Aufgabenstellung der Erfindung.

Die Aufgabe wird gelöst durch Schwingförderer gemäß den Ansprüchen 1 und 6.

Weitere bevorzugte Ausführungsformen sind in den abhängigen Ansprüchen 2 bis 5 und 7 bis 10 beansprucht.

Die Aufgabe wird auch gelöst durch ein Verfahren zur Förderung von Siliciumbruchstücken, wobei die Siliciumbruchstücke über eine Förderfläche eines Schwingförderers nach einem der Ansprüche 1 bis 10 gefördert werden.

Die Förderfläche wird durch schnelle Schwingungen mit bevorzugt kleiner Amplitude, insbesondere vor-/aufwärts und rück-/abwärts bewegt.

Die auf der Förderfläche liegenden Siliciumbruchstücke werden hierdurch in eine fließende Vorwärtsbewegung versetzt, die von einer Schleif- bis zu einer Wurfbewegung reicht.

Alle Seiten eines Siliciumbruchstücks sind dabei abwechselnd der Siliciumfläche zugewandt.

Durch die Schleif- und Wurfbewegung der Siliciumbruchstücke auf der Siliciumfläche werden die Kanten gebrochen und oberflächlich anhaftende Kontaminationen abgeschliffen, so dass eine gleichmäßige Verrundung der Bruchstücke zu beobachten ist.

Der anfallende Staub wird vorzugsweise vom Siliciumbruchstückstrom getrennt, beispielsweise durch eine Absaugvorrichtung, bevorzugt entlang des Förderwegs, besonders bevorzugt am Austrag.

Durch einen Elektro- oder Permanentmagneten, der beispielsweise am Austrag angebracht ist, werden vorzugsweise magnetische Partikel vom Siliciumbruchstückstrom getrennt.

Die Förderfläche aus Silicium, bevorzugt als Auskleidung aus Reinstsilicium ausgestaltet, ist beim Fördern durch die Kunststoffelemente vor direktem Kontakt mit dem Grundwerkstoff der Förderrinnen geschützt.

Die Förderfläche ist vorzugsweise planar, trog- oder rohrförmig ausgebildet.

Im Sinne der vorliegenden Erfindung ist unter Reinstsilicium mono- oder polykristallines Silicium mit einem Reinheitsgrad von vorzugsweise > 99,99% zu verstehen.

Vorzugsweise hat die Förderfläche aus Silicium den gleichen Reinheitsgrad wie die zu fördernden Siliciumbruchstücke.

Die Kunststoffelemente bestehen aus PU, PP, PE, PVDF oder PA.

Gemäß einer Ausführungsform handelt es sich bei den Kunststoffelementen um eine Auskleidung der Förderrinne mit Kunststoff. Die Auskleidungsteile aus Kunststoff sind in der Förderrinne verspannt. Die die Förderfläche bildenden Siliciumelemente werden ebenfalls in die mit Kunststoff ausgekleidete Förderrinne eingelegt und verspannt.

Gemäß einer weiteren Ausführungsform handelt es sich bei den Kunststoffelementen um Trägerplatten, auf denen sich Silicium befindet, welches die Förderfläche bildet. Kunststoffplatte und Siliciumauskleidungsteil sind miteinander verklebt. Die Trägerplatten mit Siliciumauskleidungen werden in der Förderrinne verspannt.

Mit der vorliegenden Erfindung ist es möglich, hochreinen Polysiliciumbruch kontaminationsarm in Förderrinnen zu transportieren.

Um ein optimales Förderverhalten der Siliciumbruchstücke zu erhalten, sollten die Auskleidungsteile in der Förderrinne ausreichend gespannt werden.

Lose oder sich lockernde Teile sind Störeinflüsse, die das Förderverhalten der Rinnen negativ beeinflussen.

Dadurch verändern sich vor allem die Schwingweiten der Rinnen und beeinflussen die Fördergeschwindigkeit und somit die Taktrate nachfolgender Prozesse.

Um dem entgegen zu wirken, werden die Auskleidungsteile aus Silicium vorzugweise im Verbund auf gemeinsame Trägerplatten befestigt.

Die Anzahl der Riegel je Trägerplatte ist abhängig von der Art der Förderrinne von 1 - n Riegel (bevorzugt 1-50).

Für das Trägerplattenmaterial ist ein kontaminationsarmer Werkstoff zu wählen, bevorzugt PU mit einer Shore-Härte 80 - 98 A ohne Zuschlags- oder Farbstoffe.

Das Trägermaterial hat dabei eine definierte Dicke von 2 - 30mm, besonders bevorzugt 3- 5mm.

Die Befestigung der Silicium-Teile auf dem Trägermaterial erfolgt vorzugsweise mit kontaminationsarmen, elastischen Klebstoffen mit hoher Eigenhaftung wie bspw. Silikonklebstoffen.

Eine Befestigung der Siliciumauskleidungen auf PU- statt Stahl-Trägermaterial wirkt sich merklich in einer geringeren Kontamination des geförderten Produkts mit Eisen aus.

Die gefertigten Auskleidungsteile (1-n) auf Trägermaterial werden in die Förderrinne eingelegt und je nach Verschleiß gewechselt.

Die Spannung der eingelegten Auskleidungen (Kunststoffauskleidung, Siliciumauskleidung, Trägerplatten) erfolgt vorzugsweise über einen oder mehrere der nachfolgend genannten Spannmechanismen:
- Kontaminationsarme Verschraubungen umlaufend an den Förderrinnen, die direkt auf die Auskleidung drücken
- Kontaminationsarme Spannkeile in der Förderrinne, verspannen die Auskleidung in Förderrichtung
- feste Verspannung der Auskleidung über die Seitenteile der Förderrinne.
- Verschraubung der Si-Auskleidung über die Trägerplatte mit dem Rinnenboden

Eine Spannung der Auskleidung kann über zusätzliche Seitenteile der Förderrinnen erfolgen, die vorzugweise über ein Schnellspannsystem an den Rinnen befestigt werden.

Die zusätzliche Spannung von oben verhindert ein Abheben bzw. Lockern der Auskleidung während der Schwingungsförderung.

Das zu verwendete Material für die Seitenteile ist bevorzugt PP sowie PE, beklebt mit PU-Matten, PU mit einer Shore-Härte 60 - 80 A, oder einem vergleichbaren kontaminationsarmen und verschleißbeständigen Material wie Silikon.

Alle Polymere, PU-Sorten und Silikone sind vorzugsweise frei von Farb- oder Zuschlagsstoffen wie z.B. Gesteinsmehl, Ruß etc. gefertigt.

Um die Auskleidung in den Förderinnen vor Verschleiß zu schützen und um Kosten zu sparen, werden bevorzugt Spaltmatten aus verschiedenen Werkstoffen an den Förderinnen befestigt, die einen direkten Kontakt der Siliciumbruchstücke mit der Auskleidung verhindern.

Das Spaltmattenmaterial ist bevorzugt aus PU mit einer Shore-Härte 60 - 80 A.

Ebenfalls beschrieben wird eine weitere Art der Förderrinnenauskleidung. Diese kann bspw. über spezielle Kunststoffe erfolgen.

Bevorzugt werden hier kontaminationsarme und hochverschleißfeste Kunststoffe wie PU mit Shore-Härte 60 - 98 A eingesetzt.

Die Art der Befestigung erfolgt dabei auf gleiche Weise wie bei der Siliciumauskleidung.

Anlagenteile mit direkten Kontakt oder Teile in unmittelbarer Nähe zum Produkt werden mit speziellem PU-Gussformteilen ummantelt oder ganze Flächen von Gestellen mit PU-Spritzbeschichtung verkleidet.

Qualifizierte Materialien sind PU-Beschichtungssysteme mit Shore-Härte 65 - 98 A ohne Beimengungen von Zuschlagsstoffen.

## Patentansprüche

1. Schwingförderer mit einer Förderrinne, die eine Förderfläche aus Silicium aufweist, **dadurch gekennzeichnet, dass** zwischen Grundkörper der Förderrinne und der Förderfläche Kunststoffelemente aus PU, PP, PE, PVDF oder PA vorhanden sind, wobei die Kunststoffelemente und das Silicium, das die Förderfläche bildet, zu Trägerplatten verklebt sind, die in die Förderrinne eingelegt und verspannt werden.

2. Schwingförderer nach Anspruch 1, wobei die Trägerplatten umlaufend an den Förderrinnen oder mit einem Förderrinnenboden verschraubt sind.

3. Schwingförderer nach einem der Ansprüche 1 bis 2, wobei die Trägerplatten mittels Spannkeilen oder anderer Spannmechanismen in der Förderrinne eingespannt werden.

4. Schwingförderer nach einem der Ansprüche 1 bis 3, weiterhin umfassend Seitenteile aus Kunststoff, die an der Förderrinne befestigt sind und die Trägerplatten einspannen.

5. Schwingförderer nach einem der Ansprüche 1 bis 4, wobei die Förderfläche aus Silicium teilweise mit Lappen aus PU abgedeckt ist.

6. Schwingförderer mit einer Förderrinne, die eine Förderfläche aus Silicium aufweist, **dadurch gekennzeichnet, dass** zwischen Grundkörper der Förderrinne und der Förderfläche Kunststoffelemente aus PU, PP, PE, PVDF oder PA vorhanden sind, wobei es sich bei den Kunststoffelementen um eine Auskleidung der Förderrinne mit Kunststoff handelt, und wobei die Förderfläche durch Auskleidungsteile aus Silicium gebildet wird, wobei die Auskleidungsteile aus Kunststoff in der Förderrinne verspannt sind, wobei die Auskleidungsteile aus Silicium in die mit Kunststoff ausgekleidete Förderrinne eingelegt und verspannt sind.

7. Schwingförderer nach Anspruch 6, wobei die Auskleidungsteile umlaufend an den Förderrinnen oder mit einem Förderrinnenboden verschraubt sind.

8. Schwingförderer nach einem der Ansprüche 6 bis 7, wobei die Auskleidungsteile mittels Spannkeilen oder anderer Spannmechanismen in der Förderrinne eingespannt werden.

9. Schwingförderer nach einem der Ansprüche 6 bis 8, weiterhin umfassend Seitenteile aus Kunststoff, die an der Förderrinne befestigt sind und die Trägerplatten einspannen.

10. Schwingförderer nach einem der Ansprüche 6 bis 9, wobei die Förderfläche aus Silicium teilweise mit Lappen aus PU abgedeckt ist.

11. Verfahren zur Förderung von Siliciumbruchstücken, wobei die Siliciumbruchstücke über eine Förderfläche eines Schwingförderers nach einem der Ansprüche 1 bis 10 gefördert werden.

## Claims

1. Vibrating conveyor having a conveyor chute, which comprises a conveyor surface consisting of silicon, **characterized in that** plastic elements consisting of PU, PP, PE, PVDF or PA are provided between the base body of the conveyor chute and the conveyor surface, wherein the plastic elements and the silicon that forms the conveyor surface are adhesively bonded to support plates, which are laid in the conveyor chute and secured.

2. Vibrating conveyor according to Claim 1, wherein the support plates are screwed circumferentially onto the conveyor chutes or to a conveyor chute bottom.

3. Vibrating conveyor according to one of Claims 1 to 2, wherein the support plates are clamped in the conveyor chute by means of clamping wedges or other clamping mechanisms.

4. Vibrating conveyor according to one of Claims 1 to 3, furthermore comprising lateral parts consisting of plastic, which are fastened on the conveyor chute and clamp the support plates.

5. Vibrating conveyor according to one of Claims 1 to 4, wherein the conveyor surface consisting of silicon is partially covered with sheets of PU.

6. Vibrating conveyor having a conveyor chute, which comprises a conveyor surface consisting of silicon, **characterized in that** plastic elements consisting of PU, PP, PE, PVDF or PA are provided between the base body of the conveyor chute and the conveyor surface, wherein the plastic elements are cladding of the conveyor chute with plastic, and wherein the conveyor surface is formed by cladding parts consisting of silicon, wherein the cladding parts consisting of plastic are secured in the conveyor chute, wherein the cladding parts consisting of silicon are laid in the conveyor chute cladded with plastic and secured.

7. Vibrating conveyor according to Claim 6, wherein the cladding parts are screwed circumferentially onto the conveyor chutes or to a conveyor chute bottom.

8. Vibrating conveyor according to one of Claims 6 to 7, wherein the cladding parts are clamped in the conveyor chute by means of clamping wedges or other clamping mechanisms.

9. Vibrating conveyor according to one of Claims 6 to 8, furthermore comprising lateral parts consisting of plastic, which are fastened on the conveyor chute and clamp the support plates.

10. Vibrating conveyor according to one of Claims 6 to 9, wherein the conveyor surface consisting of silicon is partially covered with sheets of PU.

11. Method for conveying silicon chunks, wherein the silicon chunks are conveyed over a conveyor surface of a vibrating conveyor according to one of Claims 1 to 10.

## Revendications

1. Convoyeur oscillant avec une goulotte de transport qui comporte une surface de transport en silicium, **caractérisé en ce qu'**il y a des éléments de plastique en polyuréthane (PU), polypropylène (PP), polyéthylène (PE), fluorure de polyvinylidène (FPVD) ou polyamide (PA) entre le corps de base de la goulotte de transport et la surface de transport, les éléments de plastique et le silicium formant la surface de transport étant collés en plaques de support qui sont insérées et serrées dans la goulotte de transport.

2. Convoyeur oscillant selon la revendication 1, les plaques de support étant vissées périphériquement sur les goulottes de transport ou à un fond de goulotte de transport.

3. Convoyeur oscillant selon l'une quelconque des revendications 1 à 2, les plaques de support étant serrées dans la goulotte de transport au moyen de coins de serrage ou d'autres mécanismes de serrage.

4. Convoyeur oscillant selon l'une quelconque des revendications 1 à 3, comprenant en plus des parties latérales en plastique qui sont fixées à la goulotte de transport et serrent les plaques de support.

5. Convoyeur oscillant selon l'une quelconque des revendications 1 à 4, la surface de transport en silicium étant couverte en partie de languettes en PU.

6. Convoyeur oscillant avec une goulotte de transport qui comporte une surface de transport en silicium, **caractérisé en ce qu'**il y a des éléments de plastique en PU, PP, PE, FPVD ou PA entre le corps de base de la goulotte de transport et la surface de transport, s'agissant en ce qui concerne les éléments de plastique d'un revêtement de la goulotte de transport avec du plastique et la surface de transport étant formée par des pièces de revêtement en silicium, les pièces de revêtement en plastique étant serrées dans la goulotte de transport, les pièces de revêtement en silicium étant insérées et serrées dans la goulotte de transport revêtue de plastique.

7. Convoyeur oscillant selon la revendication 6, les pièces de revêtement étant vissées périphériquement sur la goulotte de transport ou au fond de la goulotte de transport.

8. Convoyeur oscillant selon l'une quelconque des revendications 6 à 7, les pièces de revêtement étant serrées dans la goulotte de transport au moyen de coins de serrage ou d'autres mécanismes de serrage.

9. Convoyeur oscillant selon l'une quelconque des revendications 6 à 8, comprenant en plus des pièces latérales en plastique, qui sont fixées à la goulotte de transport et serrent les plaques de support.

10. Convoyeur oscillant selon l'une quelconque des revendications 6 à 9, la surface de transport en silicium étant couverte en partie de languettes en PU.

11. Procédé de transport de morceaux de silicium, les morceaux de silicium étant transportés sur une surface de transport d'un convoyeur oscillant selon l'une quelconque des revendications 1 à 10.
